# EUROPÄISCHE PATENTANMELDUNG

(11) **EP 3 818 793 A1**
(43) Veröffentlichungstag der Anmeldung: **12.05.2021**
(21) Anmeldenummer: 20205850.9
(22) Anmeldetag: 05.11.2020
(51) Int. Cl.: A01B 13/08, A01B 15/02

(54) **SCHNEIDSCHAR UND WERKZEUGKOMBINATION MIT EINEM SCHNEIDSCHAR SOWIE LANDWIRTSCHAFTLICHE BODENBEARBEITUNGSMASCHINE**

(30) Priorität: 07.11.2019 DE 102019130077
(71) Anmelder: Horsch Maschinen GmbH, 92421 Schwandorf (DE)
(72) Erfinder: HORSCH, Michael, 92421 Schwandorf (DE)
(74) Vertreter: Benninger, Johannes

(57) **Zusammenfassung**

Die Erfindung betrifft ein Schneidschar, vorzugsweise für eine landwirtschaftliche Bodenbearbeitungsmaschine (12), mit einem Montageabschnitt (20), wobei der Montageabschnitt (20) zumindest eine Montageaufnahme (50), insbesondere zur Montage an einem Träger einer Werkzeugkombination, umfasst, und mit zumindest einem ersten Schneidabschnitt (22.1) und zumindest einem zweiten Schneidabschnitt (22.2). Um eine ultraflache, insbesondere eine rein schneidende Bodenbearbeitung zu ermöglichen, ist erfindungsgemäß vorgesehen, dass der erste Schneidabschnitt (22.1) links und der zweite Schneidabschnitt (22.2) rechts neben dem Montageabschnitt (20) angeordnet ist und dass die Schneidabschnitte (22.1; 22.2) jeweils eine Schneide (60) aufweisen, wobei die Schneiden (60) einen Schneidwinkel (V3) gegenüber der Werkzeugvorschubrichtung (WV) ausbilden.

Die Erfindung umfasst zudem eine Werkzeugkombination, vorzugsweise für eine landwirtschaftliche Bodenbearbeitungsmaschine sowie eine landwirtschaftliche Bodenbearbeitungsmaschine.

## Beschreibung

Die Erfindung betrifft ein Schneidschar, vorzugsweise für eine landwirtschaftliche Bodenbearbeitungsmaschine. Die Erfindung betrifft zudem eine Werkzeugkombination mit einem Schneidschar für eine landwirtschaftliche Bodenbearbeitungsmaschine. Zudem betrifft die Erfindung eine landwirtschaftliche Bodenbearbeitungsmaschine.

In der Landwirtschaft werden zur Bodenbearbeitung sog. Scharspitzen eingesetzt, welche insbesondere Bestandteil von Werkzeugkombinationen sind. Eine derartige Scharspitze bzw. eine derartige Werkzeugkombination geht u.a. aus dem deutschen Gebrauchsmuster DE 20 2014 010 340 U1 bereits hervor. In der Regel sind eine Mehrzahl derartiger Werkzeugkombinationen an einer landwirtschaftlichen Bodenbearbeitungsmaschine angebaut und bilden dementsprechend eine Bodenbearbeitungsmaschine.

Die Werkzeugkombination dient zweckmäßig zum Lockern und Durchmischen eines Ackerbodens und umfasst einen Zinkenstiel zur Montage der Komponenten der Werkzeugkombination, eine Scharspitze zum Lockern und Aufbrechen einer Ackerfläche sowie jeweils links und rechts am Zinkenstiel montierte Scharflügel. Die Werkzeugkombination wird dementsprechend aus vier separaten Teilen gebildet, wobei die Scharspitze und die Scharflügel, welche jeweils zum Lockern und Durchmischen dienen, jeweils als separate Bauteile ausgebildet sind.

Da die Scharspitze und die Scharflügel zudem in deren Höhe versetzt zueinander angeordnet sind, ist es für eine gewünschte Funktionsweise der Werkzeugkombination erforderlich, dass diese eine Mindestarbeitstiefe aufweist, welche in der Regel mindestens 10 cm oder mehr beträgt. Aufgrund dieser Arbeitstiefe kommt es jedoch in der Regel zu einer intensiven Durchmischung des Ackerbodens, was bei einer Vielzahl an Arbeitsprozessen auch gewünscht sein kann.

Durch den mehrteiligen Aufbau ist die Werkzeugkombination jedoch kostenintensiv und umfasst viele Montageteile, welche in der Regel verschleißbehaftet und somit nicht dauerfest sind.

Darüber hinaus ist mit einer derartigen Werkzeugkombination eine ultraflache, insbesondere nicht durchmischende Bodenbearbeitung, welche bspw. zur Unkrautbekämpfung erforderlich sein kann, nicht möglich. Insbesondere ist mit einer derartigen Werkzeugkombination eine rein schneidende Bodenbearbeitung entlang einer Bodenfläche nicht möglich.

Es ist somit Aufgabe der Erfindung, ein Schneidschar, mit welchem Nachteile herkömmlicher Techniken vermieden werden können, zu schaffen. Aufgabe der Erfindung ist es insbesondere ein Schneidschar zu schaffen, mittels welchem eine ultraflache, insbesondere rein schneidende Bodenbearbeitung, ermöglicht ist.

Diese Aufgaben werden gelöst durch ein Schneidschar, vorzugsweise für eine landwirtschaftliche Bodenbearbeitungsmaschine, mit den Merkmalen des unabhängigen Anspruchs 1, durch eine Werkzeugkombination, vorzugsweise für eine landwirtschaftliche Bodenbearbeitungsmaschine, mit den Merkmalen des Anspruchs 23, sowie durch eine landwirtschaftliche Bodenbearbeitungsmaschine mit den Merkmalen des Anspruchs 31. Vorteilhafte Ausführungsformen und Weiterbildung der Erfindung sind in den abhängigen Ansprüchen und der folgenden Beschreibung unter teilweiser Bezugnahme auf die Figuren offenbart.

Die Erfindung betrifft ein Schneidschar, vorzugsweise für eine landwirtschaftliche Bodenbearbeitungsmaschine, insbesondere für eine Werkzeugkombination einer landwirtschaftlichen Bodenbearbeitungsmaschine. Das Schneidschar, d.h. die landwirtschaftliche Bodenbearbeitungsmaschine dient insbesondere zur ultraflachen, insbesondere rein schneidenden Bodenbearbeitung, d.h. insbesondere zum Lockern und Abschaben einer oberen Schicht einer Bodenoberfläche (z.B. Ackerfläche).

Das Schneidschar umfasst einen Montageabschnitt, wobei der Montageabschnitt zumindest eine Montageaufnahme, insbesondere zur Montage an einem Träger (z.B. Zinkenstiel) einer Werkzeugkombination, umfasst. Zudem weist das Schneidschar zumindest einen ersten Schneidabschnitt und zumindest einen zweiten Schneidabschnitt auf.

Um eine ultraflache, insbesondere rein schneidende Bodenbearbeitung zu ermöglichen, ist erfindungsgemäß vorgesehen, dass der erste Schneidabschnitt links und der zweite Schneidabschnitt rechts neben dem Montageabschnitt angeordnet ist und dass die Schneidabschnitte jeweils eine Schneide aufweisen, wobei die Schneiden einen Schneidwinkel gegenüber der Werkzeugvorschubrichtung ausbilden.

Der Schneidwinkel erstreckt sich quer zur Werkzeugvorschubrichtung.

Der Schneidwinkel kann zudem bspw. 90° betragen. Der Schneidwinkel kann jedoch auch größer sein als 90° oder kleiner sein als 90°. Insbesondere kann der Schneidwinkel eine Größe aufweisen, welche sich in einem Intervall zwischen 45° und 135° und/oder zwischen 60° und 120° und/oder zwischen 75° und 105° befindet.

Im Kontext der Erfindung entspricht die Werkzeugvorschubrichtung insbesondere einer Vorwärtsrichtung des Schneidschar, d.h. einer Richtung, mit der das Schneidschar entlang einer Bodenfläche bewegt wird. Dabei entspricht die Werkzeugvorschubrichtung insbesondere einer Fahrtrichtung der landwirtschaftlichen Bodenbearbeitungsmaschine.

Die Bodenbearbeitungsmaschine dient insbesondere zur Bodenbearbeitung. Es wäre jedoch auch denkbar, dass die Bodenbearbeitungsmaschine zusätzlich Säschare mit umfasst und/oder dass dem Schneidschar Saatleitungen, insbesondere räumlich, zugeordnet sind, mittels welchen Saatleitungen landwirtschaftliche Verteilgüter wie bspw. Saatgut, Dünger oder dergl. ausgebracht werden können.

Um die Anzahl an Montageteilen zu reduzieren, ist es möglich, dass das Schneidschar einstückig ausgebildet ist. Es ist auch möglich, dass das Schneidschar aus mehreren Einzelteilen zusammengesetzt ist, wobei die mehreren Einzelteile mittels lösbaren (z.B. Schrauben) und/oder unlösbaren Verbindungselementen (z.B. Niet) und/oder Verbindungsstrukturen (z.B. Schweißnaht, Lötstelle) einstückig verbunden sind. Wobei einstückig insbesondere eine Ausführungsvariante mit umfasst, in der der Montageabschnitt und der erste Schneidabschnitt und der zweite Schneidabschnitt einstückig ausgebildet sind.

Im Kontext der Erfindung bedeutet einstückig somit insbesondere, dass der Montageabschnitt und der erste Schneidabschnitt und der zweite Schneidabschnitt mit insbesondere nur einer Verbindungsstelle, zweckmäßig mit nur einem Montageabschnitt, mit einem Träger verbunden werden können, d.h. dass die Schneidabschnitte nicht wie aus dem Stand der Technik bekannt jeweils einzeln an einem Träger angebaut werden müssen.

Zur Erreichung einer seitlichen Abstützung, d.h. zur Erreichung einer möglichst ebenen Ausrichtung des Schneidschar ist gemäß einer Ausführungsvariante vorgesehen, dass die Schneidabschnitte (d.h. der erste Schneidabschnitt und der zweite Schneidabschnitt) jeweils einen Übergangsabschnitt und einen Führungsabschnitt aufweisen, wobei der Übergangsabschnitt sich zwischen dem Montageabschnitt und dem Führungsabschnitt erstreckt. Es ist zudem möglich, dass der Übergangsabschnitt durch eine Verbindungsstruktur (z.B. Schweißnaht zur einstückigen Verbindung der mehreren Einzelteile) und/oder durch eine, einen Radius ausbildende, Fläche gebildet wird.

In einer Ausführungsvariante kann vorgesehen sein, dass die Oberseiten und/oder die Unterseite eine kontinuierliche Oberfläche ausbilden.

Ein Ausführungsvariante der Erfindung kann vorsehen, dass die Schneidabschnitte in deren äußeren Bereichen jeweils einen Führungsabschnitt aufweisen und dass die Schneidabschnitte jeweils eine Oberseite und eine Unterseite aufweisen, wobei die Oberseite zur Unterseite eine senkrecht zur Werkzeugvorschubrichtung orientiere Höhenerstreckung (z.B. Lotabstand zueinander) aufweisen, welche zumindest im Bereich der Führungsabschnitte kleiner ist als 25% der maximalen Gesamtbreite des Schneidschar und/oder kleiner ist als 10% der maximalen Gesamtbreite des Schneidschar und/oder kleiner ist als 5% der maximalen Gesamtbreite des Schneidschar und/oder kleiner ist als 3% der maximalen Gesamtbreite des Schneidschar. Hierbei sind die maximale Gesamtbreite insbesondere durch die breiteste Stelle des Schneidschar definiert und die Höhenerstreckung bspw. durch eine Materialdicke des den Führungsabschnitt bildenden Abschnitts definiert. Gemäß diesem Breiten - Höhenverhältnis wird demnach eine große Arbeitsbreite des Schneidschar erreicht und durch die geringe Höhenerstreckung zudem eine ultraflache Bodenbearbeitung ermöglicht.

Um dieses Breiten - Höhenverhältnis noch weiter zu verbessern, ist es möglich, dass die Führungsabschnitte jeweils eine Mindestbreite aufweisen, wobei die zwei Mindestbreiten addiert (d.h. zusammengerechnet) eine Breite aufweisen, welche wenigstens 50% und/oder wenigstens 60% und/oder wenigstens 70% der maximalen Gesamtbreite des Schneidschar beträgt.

Gemäß einer alternativen oder ergänzenden Ausführungsvariante kann vorgesehen sein, dass die Oberseiten und/oder die Unterseiten der Führungsabschnitte, insbesondere des Führungsabschnitts links neben dem Montageabschnitt und des Führungsabschnitts rechts neben dem Montageabschnitt, symmetrisch zueinander sind und/oder im Wesentlichen parallel zueinander orientiert sind. Dabei dient als Symmetrieachse insbesondere eine Mittelachse, welche durch die Mitte des Schneidschar und parallel zur Werkzeugvorschubrichtung verläuft.

Um eine möglichst großflächige Bodenbearbeitung ohne eine Durchmischung des Bodens zu erreichen, kann gemäß einer alternativen Ausführungsvariante vorgesehen sein, dass die Schneidabschnitte, insbesondere die Führungsabschnitte, jeweils eine Oberseite und eine Unterseite aufweisen, welche zumindest abschnittweise weitgehend parallel zueinander orientiert sind. Alternativ oder ergänzend ist es möglich, dass diese (z.B. die Oberseite zur Unterseite) einen sich entgegen der Werkzeugvorschubrichtung öffnenden Öffnungswinkel ausbilden, wobei der Öffnungswinkel kleiner ist als 15° und/oder kleiner ist als 10° und/oder kleiner ist als 5°. Dabei gilt wiederum: je kleiner der Öffnungswinkel, desto geringer die Durchmischung.

Eine Ausführungsvariante kann vorsehen, dass die Schneidabschnitte eine im Wesentlichen gleichbleibende Materialstärke aufweisen, insbesondere dass die Führungsabschnitte eine im Wesentlichen gleichbleibende Materialstärke aufweisen.

Gemäß einer weiteren Ausführungsvariante ist es denkbar, dass die Führungsabschnitte durch das gleiche Bauteil gebildet werden.

Das Schneidschar ist zweckmäßig insbesondere mittensymmetrisch aufgebaut, insbesondere in Bezug auf die Werkzeugvorschubrichtung.

Gemäß einer alternativen oder ergänzenden Ausführungsvariante ist es denkbar, dass die Schneide links gegenüber der Werkzeugvorschubrichtung, insbesondere gegenüber einer Mittelachse des Schneidschar, einen ersten Winkel ausbildet und dass die Schneide rechts gegenüber der Werkzeugvorschubrichtung, insbesondere gegenüber einer Mittelachse des Schneidschar, einen zweiten Winkel ausbildet, wobei der erste Winkel und der zweite Winkel wiederum den Schneidwinkel bilden und wobei der erste Winkel und der zweite Winkel zumindest weitgehend gleich sind und/oder dass der erste Winkel und der zweite Winkel eine Differenz zueinander aufweisen, welche Differenz wenigstens 2° und/oder wenigstens 5° und/oder wenigstens 10° beträgt.

Um die Schneidwirkung der Schneiden zu verbessern, ist es denkbar, dass die Schneiden quer zur Werkzeugvorschubrichtung zumindest abschnittweise bogenförmig ausgebildet sind. Auch wäre es denkbar, dass nur eine der Schneiden bogenförmig ausgebildet ist.

Um die Schneidwirkung noch weiter zu verbessern ist es möglich, dass die Schneide links und/oder die Schneide rechts entgegengesetzt zur Werkzeugvorschubrichtung in einem Neigungswinkel geneigt sind, insbesondere von der Unterseite in Richtung der Oberseite entgegengesetzt zur Werkzeugvorschubrichtung in einem Neigungswinkel geneigt sind.

Der Neigungswinkel beträgt vorzugsweise maximal 45° und/oder maximal 30° und/ oder maximal 15° und/oder maximal 5°. Auch andere Größen des Neigungswinkels wären denkbar.

Um die Dauerhaltbarkeit des Schneidschar zu erhöhen, ist es möglich, dass die Schneiden und/oder die Unterseite und/oder die Oberseite zumindest abschnittweise mit einem verschleißfesten Material bestückt sind, insbesondere mit einem Hartmetall bestückt sind. Erfindungsgemäß kann bspw. vorgesehen sein, dass Hartmetalle zumindest abschnittsweise auf die Schneide aufgelötet sind und somit die Hartmetalle die Schneide bilden.

Gemäß einer bevorzugten Ausführungsvariante kann vorgesehen sein, dass die Schneide und die Unterseite zumindest abschnittweise mit einem L-förmigen Hartmetall bestückt sind.

Es ist möglich, dass das Schneidschar eine, dem Montageabschnitt vorgeordnete, sich quer zur Werkzeugvorschubrichtung erstreckende Stirnfläche aufweist, wobei die Stirnfläche eine Breite aufweist, welche wenigstens 5% der maximalen Gesamtbreite des Schneidschar und/oder wenigstens 10% der maximalen Gesamtbreite des Schneidschar entspricht.

Insbesondere kann vorgesehen sein, dass jeweils links und rechts zur Stirnfläche sich die Schneiden anschließen.

Die Stirnfläche kann senkrecht quer zur Werkzeugvorschubrichtung orientiert sein und/oder in einem Winkel quer zur Werkzeugvorschubrichtung orientiert sein und/oder bogenförmig quer zur Werkzeugvorschubrichtung orientiert sein.

Es ist denkbar, dass die Stirnfläche eine Höhe aufweist, welche im Wesentlichen gleich ist, zu einer senkrecht zur Werkzeugvorschubrichtung orientierten Höhenerstreckung zwischen der Oberseite und der Unterseite. Durch eine derartige Ausführung wird wiederum erreicht, dass eine möglichst geringe Durchmischung von Boden mittels des Schneidschar stattfindet.

Gemäß einer weiteren Ausführung kann vorgesehen sein, dass die Stirnfläche durch eine vor dem Montageabschnitt und sich zwischen den Schneidabschnitten erstreckende Nut gebildet wird, wobei die Nut eine Nuttiefe aufweist, welche wenigstens 5% der maximalen Tiefe des Schneidschar beträgt und/oder welche wenigstens 15% der maximalen Tiefe des Schneidschar beträgt. Die Nut kann insbesondere eine Größe (z.B. Breite und Nuttiefe) aufweisen, welche derartig ist, dass eine Scharspitze in diese hineinragen kann und/oder von dieser Nut aufgenommen werden kann.

Es kann vorgesehen sein, dass das Schneidschar, insbesondere die Schneidabschnitte und/oder die Führungsabschnitte, eine Rückseite aufweisen, wobei die Rückseite im Wesentlichen senkrecht zur Werkzeugvorschubrichtung orientiert ist und/oder zumindest abschnittweise bogenförmig ist und/oder dass die Rückseite durch eine quer zur Werkzeugvorschubrichtung orientierte linke Rückseite und eine rechte Rückseite gebildet wird, welche linke Rückseite und rechte Rückseite in einem Rückseitenwinkel zueinander orientiert sind, wobei der Rückseitenwinkel in einem Intervall zwischen 30° und 180° liegt und/oder in einem Intervall zwischen 90° und 180° liegt und/oder in einem Intervall zwischen 135° und 180° liegt, und/oder dass die linke Rückseite und/oder die rechte Rückseite zumindest abschnittweise bogenförmig sind.

Zur Montage des Schneidschar an einem Träger kann vorgesehen sein, dass die Montageaufnahme eine oder mehrere Schraubaufnahmen (z.B. gebildet durch Öffnungen, Ausschnitte, Bohrungen und/oder dergl.) und/oder Flanschelemente (z.B. gebildet durch Gewindebolzen und/oder dergl.) umfasst.

Gemäß einer Weiterbildung der Erfindung ist es zudem denkbar, dass dem Schneidschar Saatrohre und/oder Saatleitungen zugeordnet sind, mittels welchen Verteilgut (z.B. Saatgut, Dünger und/oder dergl.) entlang dem Schneidschar in Richtung einer Bodenfläche geführt werden kann.

Zur vereinfachten Montage des Schneidschar am Träger kann gemäß einer alternativen oder ergänzenden Ausführungsvariante vorgesehen sein, dass der Montageabschnitt zumindest eine Flanschfläche mit zumindest einer Montageaufnahme aufweist, sowie beidseitig neben der Montageaufnahme angebrachte Seitenteile aufweist, wobei die Flanschfläche und die Seitenteile insbesondere ein Tasche ausbilden.

Insbesondere kann vorgesehen sein, dass die Tasche durch eine Flanschfläche, zwei Seitenteile und einer in die Tasche hineinragende Oberseite des Führungsabschnitts begrenzt wird.

Um die Montage noch weiter zu vereinfachen und zudem eine Verschleißoptimierte Verbindung zu erreichen, kann gemäß einer weiteren Ausführungsvariante vorgesehen sein, dass wenigstens eine Schraubaufnahme und/oder ein Flanschelement im Bereich der Tasche angeordnet ist. Dabei kann insbesondere vorgesehen sein, dass die wenigstens eine Schraubaufnahme und/oder das wenigstens eine Flanschelement seitlich von den Seitenteilen überdeckt wird.

Zur sicheren Führung des Schneidschar an einem Träger einer Werkzeugkombination kann zudem vorgesehen sein, dass die Tasche eine Taschentiefe (max. Tiefe der Tasche) aufweist, welche wenigstens 10 mm oder wenigstens 25 mm oder wenigstens 50 mm beträgt.

Zur Erreichung einer optimierten Kraftübertragung zwischen dem Schneidschar und einem Träger einer Werkzeugkombination ist es zudem möglich, dass die Flanschfläche einen Anstellwinkel gegenüber der Oberseite des Führungsabschnitts aufweist, wobei der Anstellwinkel wenigstens 30° oder wenigstens 40° beträgt und maximal 50° oder maximal 60° beträgt.

Gemäß einer ergänzenden oder alternativen Ausführungsvariante kann vorgesehen sein, dass der linke Schneidabschnitt und der rechte Schneidabschnitt in einem dritten Winkel zueinander angeordnet sind, so dass die Schneiden quer zur Werkzeugvorschubrichtung von der Mittelachse ausgehend sich von der Mitte oben nach Außen unten erstrecken. Der dritte Winkel kann hierbei mindestens 2° oder mindestens 4° oder mindestens 7° oder mindestens 10° betragen.

Zur Vermeidung von Wiederholungen sollen im Zusammenhang mit dem Schneidschar offenbarte Merkmale auch für eine Werkzeugkombination und/oder eine Bodenbearbeitungsmaschine offenbart gelten und beanspruchbar sein. Die vorgenannten Aspekte und erfindungsgemäßen Merkmale und Ausführungsvarianten, insbesondere im Hinblick auf das Schneidschar gelten somit auch für die Werkzeugkombination und/oder die Bodenbearbeitungsmaschine. In umgekehrter Weise gilt das gleiche, so dass auch alle Aspekte, erfindungsgemäße Merkmale und Ausführungsvarianten die im Zusammenhang mit der Werkzeugkombination und/oder der Bodenbearbeitungsmaschine offenbart sind, demnach auch für das Schneidschar offenbart und entsprechend beanspruchbar sind.

Die Erfindung umfasst zur Lösung der Aufgaben zudem eine Werkzeugkombination, vorzugsweise für eine landwirtschaftliche Bodenbearbeitungsmaschine.

Die Werkzeugkombination umfasst zumindest eine Federungseinrichtung, einen Träger (z.B. Zinkenstiel) und ein Schneidschar. Insbesondere ein Schneidschar wie hierin beschrieben. Zudem ist es möglich, dass die Werkzeugkombination Verbindungselemente aufweist, zur Montage der Werkzeugkombination an einer Bodenbearbeitungsmaschine, insbesondere an einem Rahmen einer Bodenbearbeitungsmaschine.

Um eine konstante Arbeitstiefe des Schneidschar zu erreichen und zudem eine Möglichkeit zu schaffen, dass das Schneidschar Hindernissen, wie bspw. Steinen ausweichen kann, kann gemäß einer weiteren Ausführungsvariante vorgesehen sein, dass die Federungseinrichtung ausgebildet ist, eine definierte Vorspannkraft (z.B. gegenüber einer Bodenfläche) zu erzeugen und/oder dass die Federungseinrichtung durch ein, insbesondere zumindest eine Druckfeder und/oder zumindest eine Zugfeder aufweisendes, Federpaket gebildet ist.

Es ist möglich, dass das Schneidschar einen Montageabschnitt aufweist, mit zumindest einer Flanschfläche, in welcher zumindest eine Montageaufnahme (z.B. Schraubaufnahme und/oder Flanschelement) angeordnet ist, und mit beidseitig neben der Montageaufnahme angebrachten Seitenteilen, wobei die Flanschfläche und die Seitenteile eine Tasche ausbilden und wobei der Träger zumindest abschnittweise in die Tasche hineinragt.

Eine alternative oder ergänzende Ausführungsvariante kann vorsehen, dass diese eine Scharspitze mit einer Schneidkante (z.B. gebildet durch einen Radius) aufweist, wobei das Schneidschar und die Scharspitze derartig am Träger angebaut sind, dass die Scharspitze, insbesondere die Schneidkante, und die Schneide des Schneidschar in Werkzeugvorschubrichtung im Wesentlichen auf gleicher Höhe liegen und/oder einen senkrecht zur Werkzeugvorschubrichtung orientierten Schneidenabstand aufweisen, der wenigstens 10 mm oder 20 mm beträgt und welcher Schneidenabstand maximal 150 mm oder 100 mm beträgt.

Um eine verschleißarme Werkezugkombination zu erreichen, kann vorgesehen sein, dass das Schneidschar und die Scharspitze derartig am Träger montiert werden, dass die Flanschfläche des Schneidschar gegenüber der Werkzeugvorschubrichtung hinter dem Träger angebracht ist und die Scharspitze vor dem Träger angebracht ist.

Zweckmäßig kann insbesondere vorgesehen sein, dass das Schneidschar und die Scharspitze mit zumindest einem gemeinsamen Montageelement (z.B. Schraube, Bolzen und/oder dergl.) am Träger (z.B. Zinkenstiel) befestigt werden.

Es kann vorgesehen sein, dass das Schneidschar eine Stirnfläche aufweist und das die Scharspitze im Wesentlichen die gleiche Breite wie die Stirnfläche aufweist, wobei die Stirnfläche wenigstens eine Breite aufweist, welche wenigstens 5% der maximalen Gesamtbreite des Schneidschar und/oder wenigstens 10% der maximalen Gesamtbreite des Schneidschar entspricht.

Insbesondere kann vorgesehen sein, dass die Scharspitze an der Stirnfläche und/oder einer Kante der Stirnfläche des Schneidschar zumindest abschnittweise anliegt bzw. sich dort abstützt.

Der Träger kann derartig ausgeführt sein und/oder dass Schneidschar kann derartig am Träger montiert sein, dass dieses, insbesondere die Unterseite der Führungsabschnitte, gegenüber der Werkzeugvorschubrichtung und/oder gegenüber einer Bodenoberfläche einen Freiwinkel ausbildet, insbesondere einen Freiwinkel ausbildet, der maximal 10° und/oder maximal 5° und/oder maximal 3° beträgt.

Es ist zudem möglich, dass die Werkzeugkombination Saatrohre, Saatleitungen, Flüssigkeitsleitungen und/oder dergl. zur Verteilung von granularer und/oder flüssiger landwirtschaftlicher Verteilgüter (z.B. Saatgut, Dünger und/oder dergl.) umfasst.

Gemäß einer alternativen und/oder ergänzenden Ausführungsvariante ist es zudem denkbar, dass die Federungseinrichtung durch einen Federzinken gebildet wird, insbesondere durch einen derartigen Federzinken gebildet wird, der einen Träger mit aufweist, so dass die Federungseinrichtung und der Träger insbesondere einteilig ausgebildet sind.

Die Erfindung umfasst zur Lösung der Aufgaben zudem eine landwirtschaftliche Bodenbearbeitungsmaschine.

Die Bodenbearbeitungsmaschine dient insbesondere zur Bodenbearbeitung, kann aber auch zur Aussaat eingesetzt werden oder Werkzeuge zur Aussaat und Verteilung von landwirtschaftlichen Verteilgütern (z.B. Saatgut, Dünger und/oder dergl.) mit umfassen.

Die Bodenbearbeitungsmaschine umfasst zumindest zwei Schneidschare wie hierin offenbart und/oder zumindest zwei Werkzeugkombinationen wie hierin offenbart.

Um mittels der Bodenbearbeitungsmaschine ein ganzflächige Bodenbearbeitung zu ermöglichen, kann vorgesehen sein, dass die Schneidschare und/oder Werkzeugkombinationen quer zur Fahrtrichtung der Bodenbearbeitungsmaschine in einem Strichabstand (z.B. mittlerer Abstand zwischen zwei Schneidscharen und/oder Werkzeugkombinationen) beabstandet zueinander angeordnet sind, wobei der Strichabstand derartig definiert ist, dass sich die Schneidschare quer zur Fahrtrichtung zumindest abschnittweise überdecken. Insbesondere, dass sich die Führungsabschnitte der Schneidschare quer zur Fahrtrichtung zumindest abschnittweise überdecken. D.h. das zumindest Teile einer Bodenfläche von zwei Schneidscharen überfahren, d.h. bearbeitet werden. Dies kann bspw. derartig erfolgen, dass jeweils eine annähernd gleiche Überdeckung zwischen zwei Schneidscharen vorhanden ist.

An der Bodenbearbeitungsmaschine können derartig viele Schneidschare und/oder Werkzeugkombinationen angebracht sein, dass die Summe der maximalen Gesamtbreiten, der wenigstens zwei Schneidschare mindestens 5% oder mindestens 10% oder mindestens 20% größer ist als die Arbeitsbreite der Bodenbearbeitungsmaschine. D.h. beträgt bspw. die Arbeitsbreite 3 Meter kann eine derartige Anzahl von Schneidscharen eingesetzt werden oder können derartig Schneidschare mit einer maximalen Gesamtbreite eingesetzt werden, dass die Summe dieser Gesamtbreiten mindestens 3,15 Meter oder mindestens 3,30 Meter oder mindestens 3,60 Meter beträgt.

Es ist zudem möglich, dass das Schneidschar und/oder die Werkzeugkombination derartig an einer Rahmenkonstruktion montiert ist, dass eine Unterseite der Führungsabschnitte gegenüber der Werkzeugvorschubrichtung WV und/oder gegenüber einer Bodenoberfläche einen Freiwinkel ausbildet, insbesondere einen Freiwinkel ausbildet, der maximal 10° und/oder maximal 5° und/oder maximal 3° beträgt.

Zur Erreichung einer optimalen Bodenbearbeitung mittels der Bodenbearbeitungsmaschine kann zudem vorgesehen sein, dass die Schneidschare und/oder Werkzeugkombinationen in wenigstens zwei Scharreihen hintereinander an einem Rahmen angeordnet sind und das nachfolgend an die Schneidschare und/oder die Werkzeugkombinationen Einebnungswerkzeuge (z.B. Scheiben, Striegel, Nivellatoren und/oder dergl.) und/oder Rückverfestigungselemente, insbesondere eine Packerwalze angeordnet ist. Die Einebnungswerkzeuge können wiederum auch vor und/oder nach der Packerwalze angeordnet sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: eine Perspektivansicht einer Ausführungsvariante einer landwirtschaftlichen Bodenbearbeitungsmaschine mit einer Mehrzahl von Werkzeugkombinationen und Schneidscharen,
- Figur 1B: eine Draufsicht einer Bodenbearbeitungsmaschine gemäß der Figur 1A,
- Figur 1C: eine Vorderansicht einer Bodenbearbeitungsmaschine gemäß den Figuren 1A und 1B,
- Figur 2A: eine Perspektivansicht einer Ausführungsvariante einer Werkzeugkombination wie sie bspw. in einer Bodenbearbeitungsmaschine gemäß den Figuren 1 eingesetzt werden kann,
- Figur 2B: eine Vorderansicht einer Werkzeugkombination gemäß der Figur 2A,
- Figur 2C: eine Seitenansicht einer Werkzeugkombination gemäß den Figuren 2A und 2B,
- Figur 3A: eine Perspektivansicht einer Ausführungsvariante eines erfindungsgemäßen Schneidschar,
- Figur 3B: eine Draufsicht eines Schneidschar gemäß der Figur 3A mit in den außen Bereichen gekennzeichneten Führungsflächen,
- Figur 3C: eine Seitenansicht eines Schneidschar gemäß den Figuren 3A und 3B,
- Figur 3D: eine Draufsicht eines Schneidschar gemäß den Figuren 3A bis 3C,
- Figur 3E: eine Draufsicht einer Ausführungsvariante eines Schneidschar mit einer zweigeteilten Rückseite, insbesondere mit einer linken Rückseite und einer rechten Rückseite welche in einem Rückseitenwinkel zueinander orientiert sind,
- Figur 4A: eine Perspektivansicht einer Ausführungsvariante eines erfindungsgemäßen Schneidschar, wobei die Stirnfläche durch eine Nut gebildet wird,
- Figur 4B: eine Draufsicht eines Schneidschar gemäß den Figur 4A mit in den außen Bereichen gekennzeichneten Führungsflächen,
- Figur 4C: eine Seitenansicht eines Schneidschar gemäß den Figuren 4A und 4B, und
- Figur 4D: eine Draufsicht eines Schneidschar gemäß den Figuren 4A bis 4C.

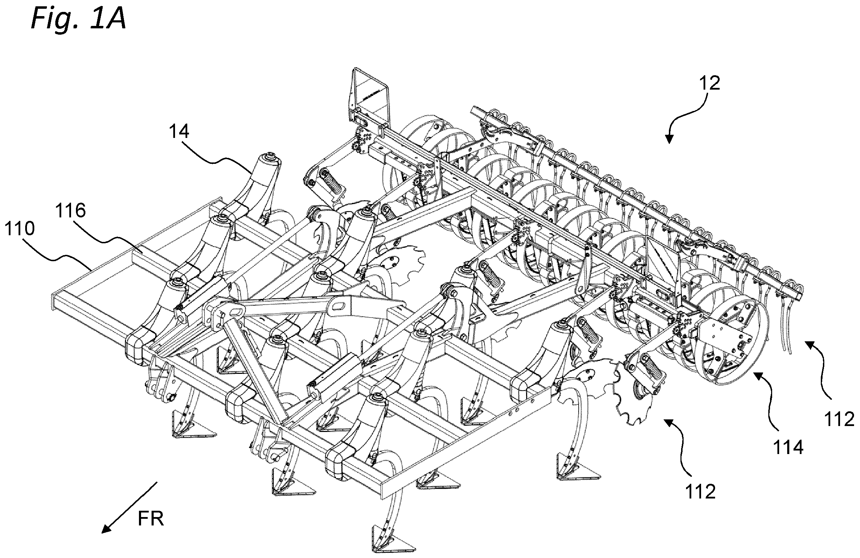

Die in den Figuren 1A bis 4D gezeigten Ausführungsvarianten stimmen zumindest teilweise überein, so dass ähnliche oder identische Teile mit den gleichen Bezugszeichen versehen sind und zu deren Erläuterungen auch auf die Beschreibung der anderen Ausführungsformen bzw. Figuren verwiesen wird, um Wiederholungen zu vermeiden. Die dargestellten Ausführungsvarianten bzw. Figuren stellen lediglich Beispiele dar, wie das erfindungsgemäße Schneidschar, die erfindungsgemäße Werkzeugkombination sowie die erfindungsgemäße landwirtschaftliche Bodenbearbeitungsmaschine ausgeführt sein können und stellen keine abschließende Begrenzung dar.

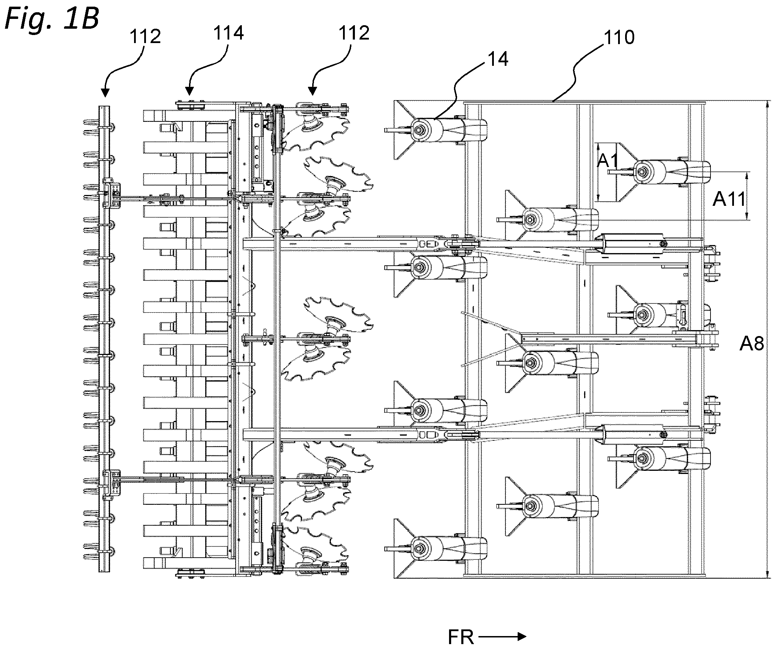

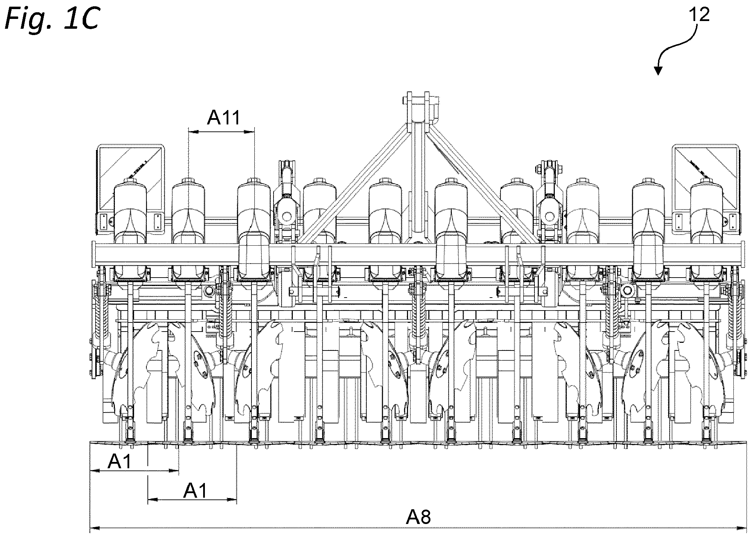

Eine Ausführungsvariante einer landwirtschaftlichen Bodenbearbeitungsmaschine 12 geht aus der Perspektivansicht gemäß der Figur 1A, der Draufsicht gemäß Figur 1B und der Vorderansicht gemäß Figur 1C hervor.

Die Bodenbearbeitungsmaschine 12 dient insbesondere zur Bodenbearbeitung, könnte jedoch ergänzend oder alternativ auch zur Aussaat eingesetzt werden und/oder Werkzeuge zur Aussaat mit umfassen.

Die Bodenbearbeitungsmaschine 12 umfasst eine Rahmenkonstruktion 110, an welcher einer eine Mehrzahl von Werkzeugkombinationen 14 mit Schneidscharen 10 angebaut sind. Die Werkzeugkombinationen 14 sind in drei Reihen bzw. in drei Scharreihen 116 hintereinander und jeweils quer zur Fahrtrichtung FR in einem Strichabstand A11 beabstandet zueinander an der Rahmenkonstruktion 110 bzw. an der Bodenbearbeitungsmaschine 12 angebaut. Die Werkzeugkombinationen 14 können insbesondere mittels Verbindungselementen an der Rahmenkonstruktion 110 angebaut sein.

Nachfolgend an die Werkzeugkombinationen 14 umfasst die Bodenbearbeitungsmaschine 12 Einebnungswerkzeuge 112 (z.B. in Form von Scheiben und Striegel) und Rückerverfestigungselemente 114, bzw. eine Packerwalze. Es wäre jedoch auch eine andere Anordnung, insbesondere eine andere Reihenfolge denkbar, so dass bspw. direkt nachfolgend an die Werkzeugkombinationen 14 Rückverfestigungselemente 114 folgen. Die Rückverfestigungselemente 114 sind höhenverstellbar gegenüber der Rahmenkonstruktion 110, um somit eine Arbeitstiefe der an den Werkzeugkombinationen 14 angebrachten Schneidschare 10 verändern zu können.

Auch eine Ausführungsvariante ohne Rückverfestigungselemente 114 und nur mit Einebnungswerkzeugen 112 wäre denkbar.

Die Bodenbearbeitungsmaschine 10 weist eine Arbeitsbreite A8 auf, wobei diese insbesondere durch die Anzahl und Anordnung an Werkzeugkombinationen 14 und deren Strichabstand A11 (z.B. mittlerer Abstand von zwei Werkzeugkombinationen zueinander) und/oder durch eine Breite von nebeneinander angeordneten Rückverfestigungselemente 114 (z.B. Breite der Packerwalze) definiert wird.

Zur Erreichung einer möglichst ganzflächigen Bodenbearbeitung ist erfindungsgemäß vorgesehen, dass die Schneidschare 10 eine maximale Gesamtbreite A1 aufweisen. Zudem ist vorgesehen, dass die Schneidschare 10 und die Werkzeugkombinationen quer zur Fahrtrichtung FR der Bodenbearbeitungsmaschine 12 in einem Strichabstand A11 beabstandet zueinander angeordnet sind, wobei der Strichabstand A11 derartig definiert ist, dass sich die Schneidschare 10 quer zur Fahrtrichtung FR zumindest abschnittweise überdecken (siehe hierzu bspw. Figur 1C). D.h. weist bspw. die maximale Gesamtbreite A1 des Schneidschar 400 mm auf, kann erfindungsgemäß vorgesehen sein, dass der Strichabstand A11 maximal 400 mm beträgt, zweckmäßig vorzugsweise jedoch kleiner ist als 400 mm.

Insbesondere ist vorgesehen, dass die Summe der maximalen Gesamtbreite A1 der Schneidschare mindestens 5% oder mindestens 10% oder mindestens 20% größer ist als die Arbeitsbreite A8 der Bodenbearbeitungsmaschine 12. D.h. beträgt bspw. die Arbeitsbreite A8 3 Meter kann eine derartige Anzahl von Schneidscharen 10 eingesetzt werden oder können derartige Schneidschare 10 mit einer maximalen Gesamtbreite A1 eingesetzt werden, dass die Summte dieser Gesamtbreiten A1 mindestens 3,15 Meter oder mindestens 3,30 Meter oder mindestens 3,60 Meter beträgt.

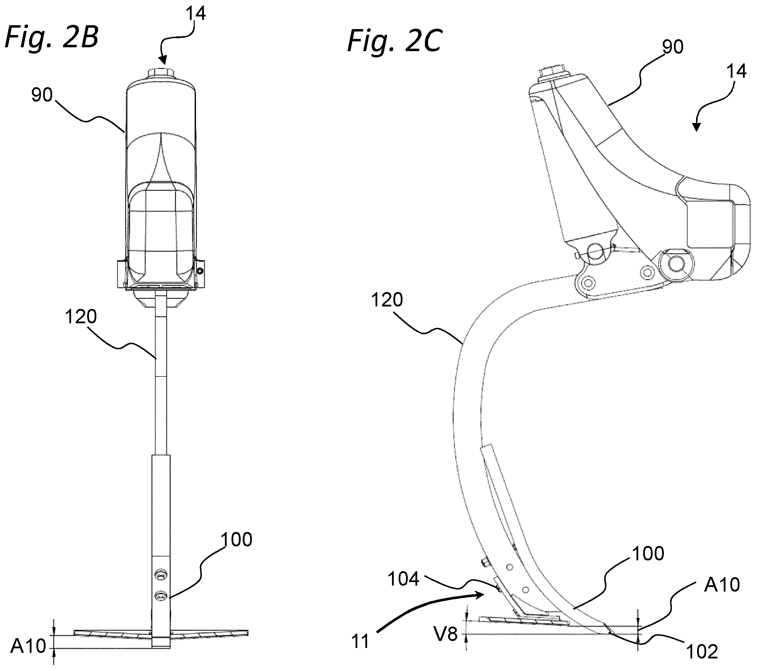

Die Schneidschare 10 und/oder die Werkzeugkombinationen 14 sind insbesondere derartig an der Rahmenkonstruktion 110 angebaut bzw. montiert, dass eine Unterseite 82 der Führungsabschnitte der Schneidschare 10 gegenüber der Werkzeugvorschubrichtung WV und/oder gegenüber einer Bodenfläche einen Freiwinkel V8 ausbildet, insbesondere einen Freiwinkel V8 ausbildet, der maximal 10° und/oder maximal 5° und/oder maximal 3° beträgt (siehe hierzu auch Figur 2C).

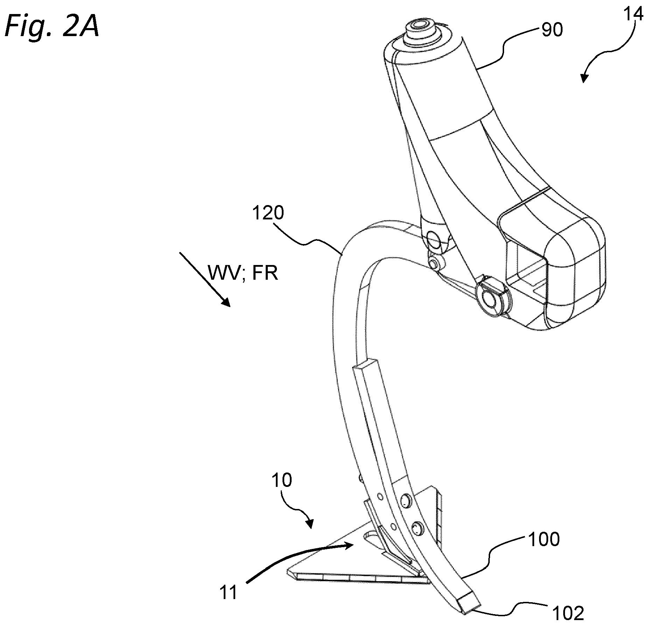

Eine Ausführungsvariante einer erfindungsgemäßen Werkzeugkombination 14 geht aus der Perspektivansicht der Figur 2A, einer Vorderansicht der Figur 2B und einer Seitenansicht der Figur 2C hervor.

Die Werkzeugkombination 14 umfasst ein Federungseinrichtung 90, welche ausgebildet ist, eine definierte Vorspannkraft zu erzeugen, d.h. das Schneidschar 10 mit einer definierten Vorspannkraft entlang einer Bodenoberfläche zu führen. Um dennoch ein Ausweichen des Schneidschar 10 insbesondere gegenüber bspw. Hindernissen wie Steinen zu ermöglichen, ist insbesondere vorgesehen, dass die Federungseinrichtung 90 durch ein, zumindest eine Druckfeder und/oder eine Zugfeder aufweisendes, Federpaket gebildet ist.

Es wären auch andere Federungseinrichtungen denkbar, bspw. auch Federzinken. Insbesondere auch derartige Federungseinrichtungen, die einen Träger mit umfassen.

Die Werkzeugkombination 14 umfasst zudem einen Träger 120 (z.B. Zinkenstiel) und ein Schneidschar 10.

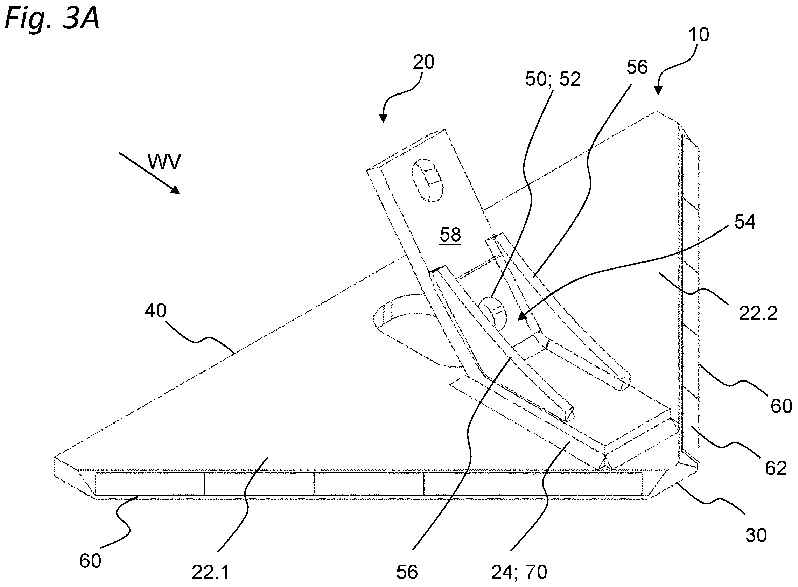

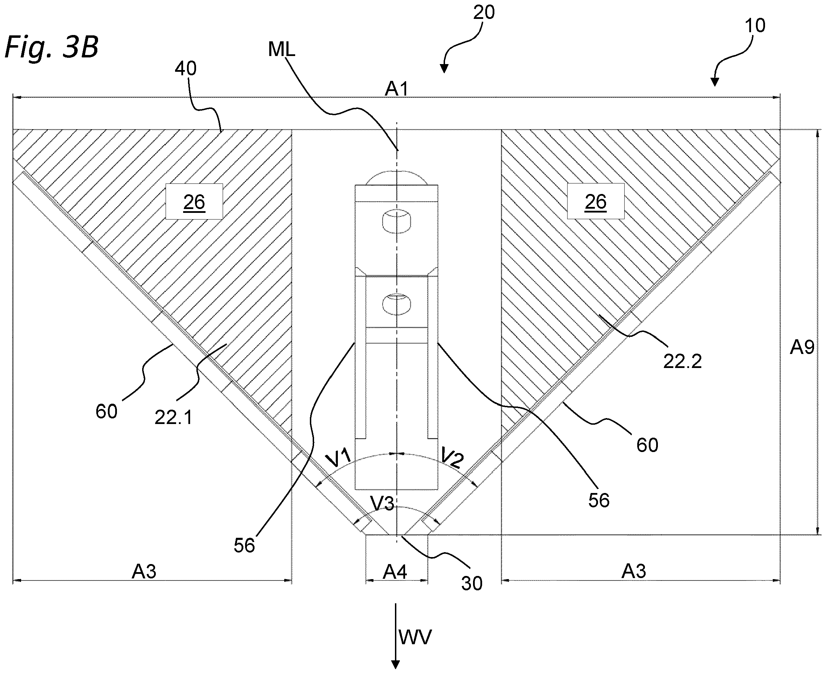

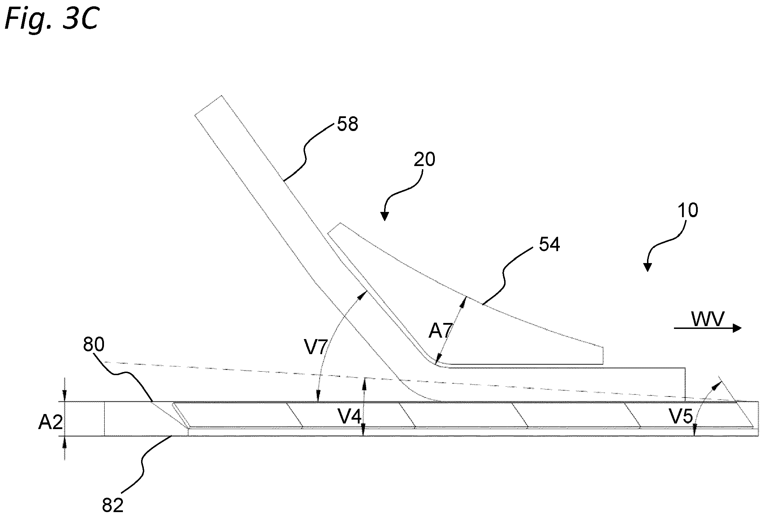

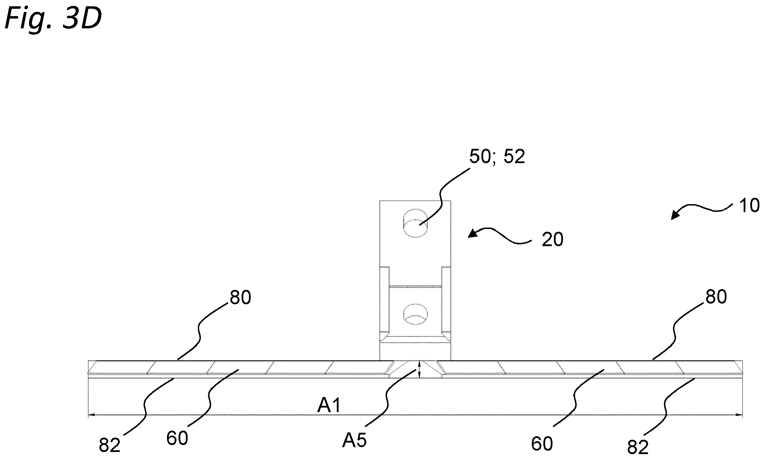

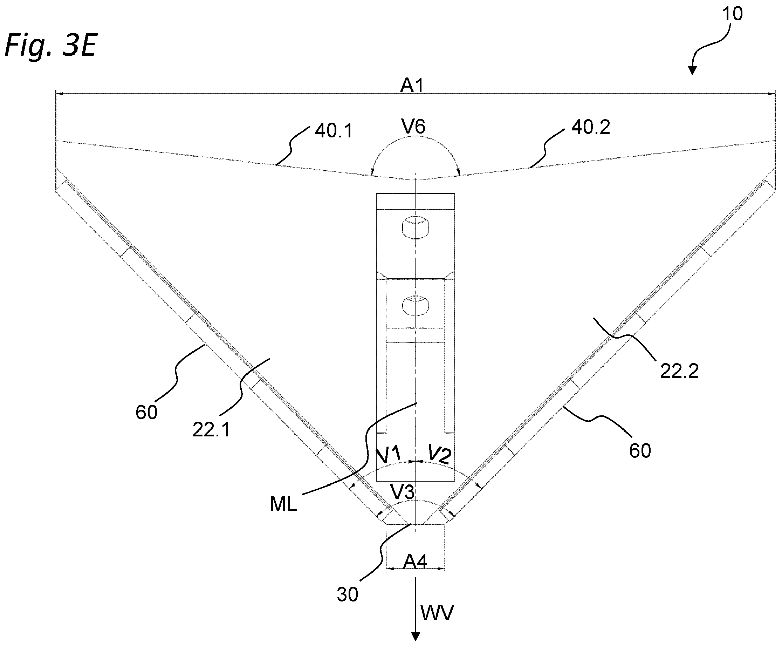

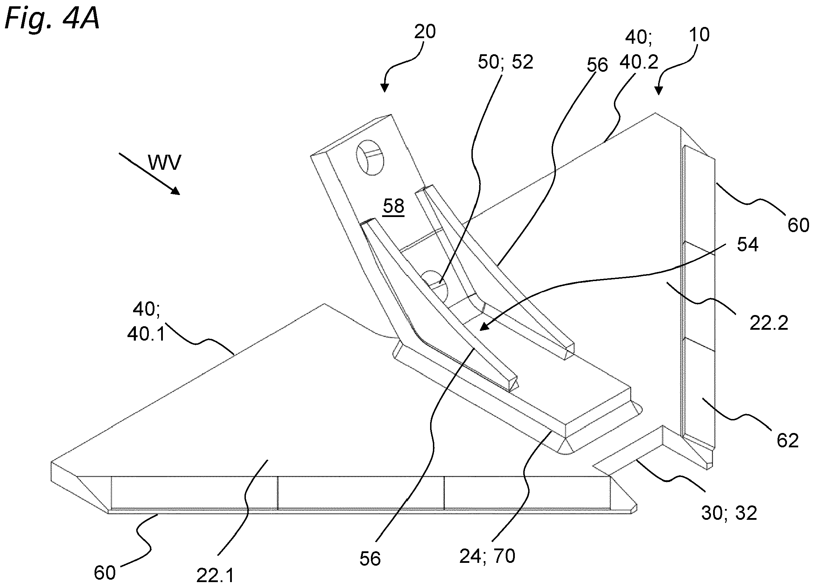

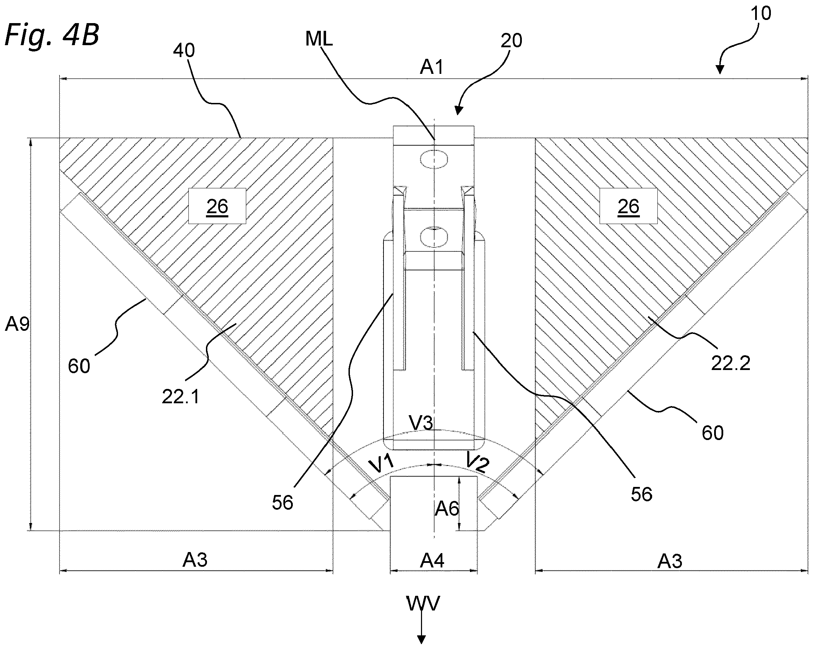

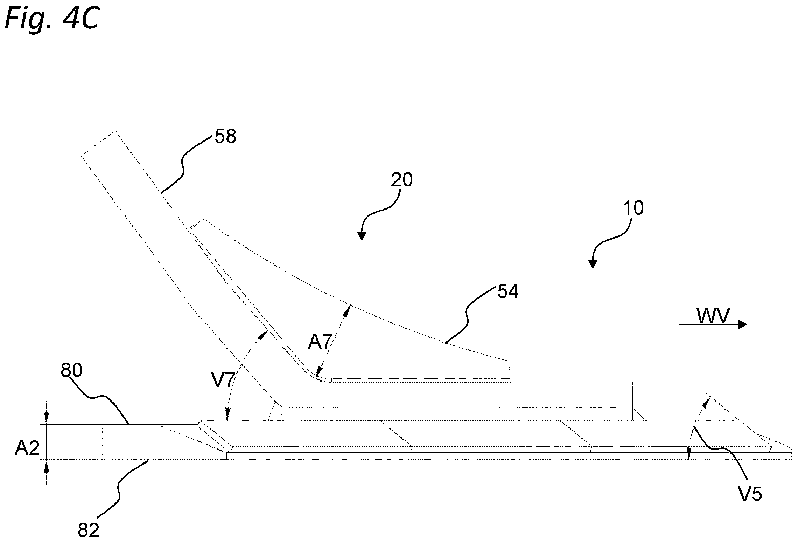

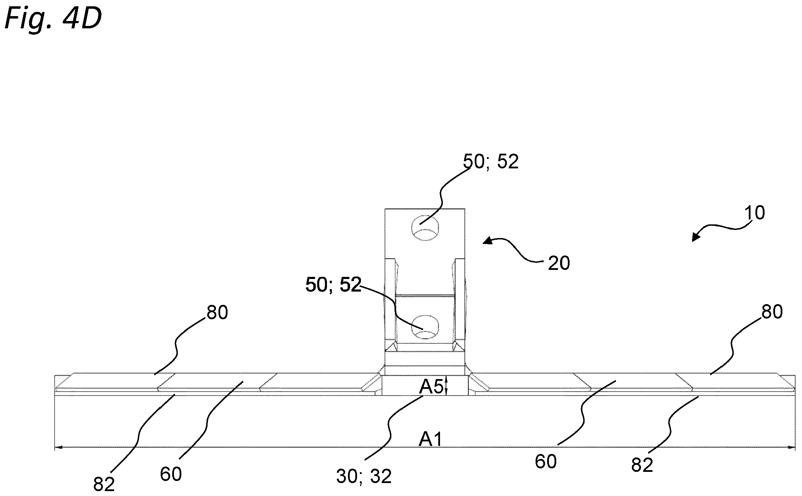

Wie zudem aus den Figuren 3 und 4 hervorgeht, umfasst das Schneidschar einen Montageabschnitt 20 mit zumindest einer Flanschfläche 58, in welcher zumindest eine Montageaufnahme 50 (z.B. Ausschnitt, Bohrung und/oder dergl.) angeordnet ist. Zudem umfasst der Montageabschnitt 20 beidseitig neben der Montageaufnahme 50 angeordnete Seitenteile 56, wobei die Flanschfläche 58 und die Seitenteile 56 somit eine Tasche 54 ausbilden und wobei der Träger 120 zumindest abschnittweise in die Tasche hineinragt (siehe hierzu Figur 2A und 2C).

Gemäß den Figuren 2 umfasst die Werkzeugkombination 14 zudem ein Scharspitze 100. Die Scharspitze 100 weist zudem eine Schneidkante 102 (z.B. gebildet durch eine Kante und/oder einen Radius) auf. Gemäß der Figur 2B und Figur 2C ist zudem vorgesehen, dass die Scharspitze 100 und das Schneidschar 10 derartig am Träger 120 angebaut sind, dass die Scharspitze 100, insbesondere die Schneidkante 102 und die Schneide 60 des Schneidschar 10 einen senkrecht zur Werkzeugvorschubrichtung WV (bzw. Fahrtrichtung FR) orientierten Schneidenabstand A10 aufweisen, wobei der Schneidenabstand A10 wenigstens 10 mm oder wenigstens 20mm beträgt und wobei der Schneidenabstand A10 maximal 150 mm oder 100 mm beträgt. Es wäre auch denkbar, dass die Scharspitze 100, insbesondere die Schneidkante 102 und die Schneide 60 des Schneidschar 10 in Werkzeugvorschubrichtung WV (bzw. Fahrtrichtung FR) im Wesentlichen auf gleicher Höhe liegen.

Es kann zudem vorgesehen sein, dass das Schneidschar 10 und die Scharspitze 100 derartig am Träger 120 montiert sind, dass die Flanschfläche 58 (vgl. Fig. 3A) gegenüber der Werkzeugvorschubrichtung WV hinter dem Träger 120 (z.B. an einem rückwärtigen Ende des Trägers) angebracht ist und dass die Scharspitze 100 vor dem Träger 120 angebracht ist.

Eine bevorzugte Montagerichtung für das Schneidschar 10 ist aus der Fig. 2A sowie aus der Fig. 2C ersichtlich, wo ein mit der Bezugsziffer 11 versehener Pfeil diese Montagerichtung zeigt. Dort ist erkennbar, dass das Schneidschar 10 mit seiner insbesondere in Fig. 3A erkennbaren Flanschfläche 58 rückseitig an das untere Ende des Trägers 120 angesetzt und dort verschraubt wird. Mit der Rückseite des Trägers 120 ist dessen konvex gekrümmte Seite gemeint, die der Werkzeugvorschubrichtung WV entgegengesetzt ist.

Wie insbesondere aus der Figur 2C ersichtlich ist, kann zudem vorgesehen sein, dass das Schneidschar 10 und die Scharspitze 100 mit zumindest einem gemeinsamen Montageelement 104 (z.B. Schraube) am Träger 120 befestigt werden.

Die Figuren 2A und 2C lassen somit erkennen, dass die Montagerichtung 11 für das Schneidschar 10 in etwa gleichgerichtet zur Werkzeugvorschubrichtung WV ist, während eine hier nicht näher verdeutlichte Montage für die Scharspitze 100 in einer Richtung erfolgt, die in etwa entgegengesetzt zur Werkzeugvorschubrichtung WV orientiert ist.

Ein Vorteil der rückseitig am Träger 120 erfolgenden Montage mit der gezeigten Montagerichtung 11 besteht u.a. darin, dass an der Vorderseite des Trägers 120, an der die Scharspitze 100 montiert ist, generell ein Freiraum geschaffen ist, um ggf. auch andere Werkzeuge (nicht gezeigt) als die gezeigte Scharspitze 100 befestigen zu können, oder um dort neben der Scharspitze 100 zusätzlich weitere Werkzeuge zu montieren.

Es kann vorgesehen sein, dass das Schneidschar 10 eine Stirnfläche 30 aufweist und dass die Scharspitze 100 im Wesentlichen die gleiche Breite wie die Stirnfläche 30 aufweist, wobei die Stirnfläche 30 wenigstens eine Breite A4 aufweist, welche wenigstens 5% der maximalen Gesamtbreite A1 des Schneidschar 10 und/oder wenigstens 10% der maximalen Gesamtbreite A1 des Schneidschar 10 entspricht.

Es ist insbesondere möglich, dass die Scharspitze 100 vor der Stirnfläche 30 angeordnet ist und/oder an der Stirnfläche 30 oder einer Kante der Stirnfläche 30 anliegt und/oder abstützt. Insofern die Stirnfläche 30 durch eine Nut 32 gebildet wird (vergl. Figur 4), ist es zudem möglich, dass die Scharspitze 100 zumindest abschnittweise in die Nut 32 hineinragt.

Der Träger 120 ist insbesondere derartig ausgeführt und/oder das Schneidschar 10 ist insbesondere derartig am Träger 120 montiert, dass eine Unterseite 82 der Führungsabschnitte der Schneidschare 10 gegenüber der Werkzeugvorschubrichtung WV und/oder gegenüber einer Bodenfläche einen Freiwinkel V8 ausbildet, insbesondere einen Freiwinkel V8 ausbildet, der maximal 10° und/oder maximal 5° und/oder maximal 3° beträgt.

Weitere Details eines erfindungsgemäßen Schneidschar 10 gehen aus den Figuren 3 und 4 hervor, wobei die Figur 4 gegenüber der Figur 3 hierbei eine Stirnfläche 30 aufweist, welche durch eine Nut 32 gebildet wird.

Die Schneidschare 10 können insbesondere an landwirtschaftlichen Bodenbearbeitungsmaschinen 12 gemäß den Figuren 1 und/oder an Werkzeugkombinationen 14 gemäß den Figuren 14 eingesetzt werden. Jedoch wären auch andere Bodenbearbeitungsmaschinen 12 und Werkzeugkombinationen 14 denkbar.

Die Schneidschare 10 umfassen jeweils einen Montageabschnitt 20 mit zumindest einer Montageaufnahme 50 (gemäß den Figuren 3 und 4 mit zwei Montageaufnahmen 50). Mittels des Montageabschnitts 20 bzw. mittels der Montageaufnahme 50 kann das Schneidschar 10 insbesondere an einem Träger 120 einer Werkzeugkombination 14 und/oder einer Bodenbearbeitungsmaschine 10 montiert werden.

Zudem umfassen die Schneidschare 10 jeweils einen ersten Schneidabschnitt 22.1 und einen zweiten Schneidabschnitt 22.2, wobei der erste Schneidabschnitt 22.1 links und der zweite Schneidabschnitt 22.2 rechts neben dem Montageabschnitt 20 angeordnet ist.

Die Schneidabschnitte 22.1; 22.2 weisen jeweils eine Schneide 60 auf, welche Schneiden wiederum einen Schneidwinkel V3 gegenüber der Werkzeugvorschubrichtung WV ausbilden. Der Schneidwinkel V3 ist gemäß den Ausführungsbeispielen im Wesentlichen 90°. Es wären jedoch auch größere oder kleinere Schneidwinkel V3 denkbar. Zudem ist der Schneidwinkel V3 jeweils quer zur Werkzeugvorschubrichtung WV orientiert.

Zudem ist es denkbar, dass die Schneiden 60 zumindest abschnittweise in den Montageabschnitt 20 hineinragen.

Der Schneidwinkel V3 kann durch einen ersten Winkel V1 und einen zweiten Winkel V2 gebildet sein. Insbesondere kann vorgesehen sein, dass die Schneide 60 links gegenüber der Werkzeugvorschubrichtung WV, insbesondere quer gegenüber einer Mittelachse ML des Schneidschar 10, einen ersten Winkel V1 ausbildet und dass die Schneide 60 rechts gegenüber der Werkzeugvorschubrichtung WV, insbesondere quer gegenüber einer Mittelachse ML des Schneidschar 10, einen zweiten Winkel V2 ausbildet.

Der erste Winkel V1 und der zweite Winkel V2 sind gemäß den Ausführungsbeispielen jeweils zumindest weitgehend gleich. Es wäre jedoch auch denkbar, dass diese eine Differenz zueinander aufweisen, welche Differenz wenigstens 2° und/oder wenigstens 5° und/oder wenigstens 10° beträgt. So kann bspw. der erste Winkel V1 2° größer oder kleiner sein als der zweite Winkel V2.

Gemäß einer alternativen oder ergänzenden Ausführungsvariante wäre es zudem denkbar, dass die Schneiden 60, und/oder zumindest eine der Schneiden 60, quer zur Werkzeugvorschubrichtung WV zumindest abschnittweise bogenförmig ausgebildet sind.

Das Schneidschar 10 ist jeweils einstückig ausgebildet, wobei gemäß den Ausführungsbeispielen hierfür mehrere Einzelteile mittels Verbindungsstrukturen (z.B. Schweißnaht) einstückig verbunden sind. Insbesondere sind der Montageabschnitt 20 und der erste Schneidabschnitt 22.1 und der zweite Schneidabschnitt 22.2 mittels einer Verbindungsstruktur 70 derartig verbunden, dass diese einstückig sind.

In den Figuren 3B und 4B sind jeweils zum besseren Verständnis schraffierte Flächen enthalten, wobei diese schraffierten Flächen bspw. einen Führungsabschnitt 26 definierten können. So umfassen die Schneidabschnitte 22.1; 22.2 jeweils einen Übergangsabschnitt 24 und einen Führungsabschnitt 26, wobei der Übergangsabschnitt 24 jeweils sich zwischen dem Montageabschnitt 20 und dem Führungsabschnitt erstreckt. Gemäß den Ausführungsbeispielen wird der Übergangsabschnitt 24 jeweils durch eine Verbindungsstruktur 70 (z.B. Schweißnaht) gebildet. Es wäre jedoch auch denkbar, dass diese durch eine, einen Radius ausbildende Fläche gebildet wird.

Es sei darauf hingewiesen, dass gemäß den Ausführungsbeispielen die Führungsfläche 26 bis zur Verbindungsstruktur 70 heranreicht. Zum besseren Verständnis bzw. zur besseren Erklärung ist jedoch nur ein Teilbereich der Führungsfläche 26 schraffiert dargestellt.

Erfindungsgemäß kann insbesondere vorgesehen sein, dass die Führungsabschnitte 26 jeweils eine Mindestbreite aufweisen, wobei die zwei Mindestbreiten A3 addiert eine Breite aufweisen, welche wenigstens 50% und/oder wenigstens 60% und/oder wenigstens 70% der maximalen Gesamtbreite A1 des Schneidschar 10 beträgt. D.h. weist bspw. das Schneidschar 10 eine maximale Gesamtbreite A1 von 400 mm auf kann insbesondere vorgesehen sein, dass die zwei Führungsflächen 26, d.h. die zwei Mindestbreiten A3 der Führungsflächen 26 addiert (d.h. zusammengerechnet) eine Breite von wenigstens 200 mm und/oder wenigstens 240 mm und/oder wenigstens 280 mm aufweisen.

Die Schneidabschnitte 22.1; 22.2 weisen in deren äußeren Bereichen jeweils einen Führungsabschnitt 26 auf. Zudem weisen die Schneidabschnitte 22.1; 22.2, insbesondere die Führungsabschnitte 26 der Schneidabschnitte 22.1; 22.2 jeweils eine Oberseite 80 und eine Unterseite 82 auf. Die Oberseite 80 und die Unterseite 82 weisen zudem ein senkrecht zur Werkzeugvorschubrichtung WV orientierte Höhenerstreckung A2 auf, welche zumindest im Bereich der Führungsabschnitte 26 kleiner ist als 25% der maximalen Gesamtbreite (A1) des Schneidschar 10 und/oder kleiner ist als 10% der maximalen Gesamtbreite A1 des Schneidschar 10 und/oder kleiner ist als 5% der maximalen Gesamtbreite A1 des Schneidschar 10 und/oder kleiner ist als 3% der maximalen Gesamtbreite A1 des Schneidschar 10. D.h. weist bspw. das Schneidschar 10 eine maximale Gesamtbreite A1 von 400 mm auf kann insbesondere vorgesehen sein, dass die Höhenerstreckung A2 kleiner ist als 100 mm und/oder kleiner ist als 40mm und/oder kleiner ist als 20mm und/oder kleiner ist als 12 mm. Insbesondere kann die Höhenerstreckung A2 im Wesentlichen 10 mm betragen.

Erfindungsgemäß kann vorgesehen sein, dass die Oberseiten 80 und/oder die Unterseiten 82 der Führungsabschnitte 26, insbesondere des Führungsabschnitts 26 links neben dem Montageabschnitt 20 und des Führungsabschnitts 26 rechts neben dem Montageabschnitt 20, symmetrisch zueinander sind und/oder im Wesentlichen parallel zueinander orientiert sind. Dabei dient Symmetrieachse insbesondere eine Mittelachse ML, welche durch die Mitte des Schneidschar 10 und parallel oder deckungsgleich zur Werkzeugvorschubrichtung WV verläuft.

Wie insbesondere aus der Figur 3C hervorgeht, kann vorgesehen sein, dass die Schneidabschnitte 22.1; 22.2, insbesondere die Führungsabschnitte 26, jeweils eine Oberseite 80 und eine Unterseite 82 aufweisen, welche zumindest abschnittweise weitgehend parallel zueinander orientiert sind und/oder einen sich entgegen der Werkzeugvorschubrichtung WV öffnenden Öffnungswinkel V4 ausbilden, wobei der Öffnungswinkel V4 kleiner ist als 15° und/oder kleiner ist als 10° und/oder kleiner ist als 5°. Der Öffnungswinkel V4 ist gemäß der Figur 3C zum besseren Verständnis durch eine gestrichelte Linie dargestellt und liegt somit zwischen der Unterseite 82 und einer schrägen Oberseite an.

Die Schneidabschnitte 22.1; 22.2 weisen jeweils eine im Wesentlichen gleichbleibende Materialstärke auf. Insbesondere weisen die Führungsabschnitte 26 eine im Wesentlichen gleichbleibende Materialstärke auf. Gemäß den Ausführungsbeispielen werden die Führungsabschnitte 26 jeweils durch das gleiche Bauteil gebildet.

Gemäß der Figuren 3C und 4C weisen die Schneiden 60 links und/oder die Schneiden 60 rechts entgegengesetzt zur Werkzeugvorschubrichtung WV einen Neigungswinkel V5 auf, wobei sich der Neigungswinkel V5 insbesondere von der Unterseite 82 in Richtung der Oberseite 80 entgegengesetzt zur Werkzeugvorschubrichtung WV erstreckt.

Der Neigungswinkel V5 beträgt hierbei maximal 45° und/oder maximal 30° und/oder maximal 15° und/oder maximal 5°. Hierbei kann gelten: Desto kleiner der Neigungswinkel V5 desto ist, besser ist die Schneidwirkung des Schneidschar 10.

Die Schneiden 60 sind zudem mit einem verschleißfesten Material 62 bestückt, insbesondere mit einem Hartmetall bestückt. Zudem wäre es denkbar, dass die Schneiden 60 und/oder die Unterseiten 82 und/oder die Oberseiten 80 zumindest abschnittweise mit einem verschleißfesten Material bestückt sind. Insbesondere kann vorgesehen sein, dass die Schneiden 60 und die Unterseite 82 mit einem einstückigen, L-Förmigen verschleißfesten Martial zumindest abschnittweise bestückt sind.

Dem Montageabschnitt 20 kann eine sich quer zur Werkzeugvorschubrichtung WV erstreckende Stirnfläche 30 vorgeordnet sein, wobei die Stirnfläche 30 senkrecht und quer zur Werkzeugvorschubrichtung WV orientiert sein kann oder in einem Winkel und quer zur Werkzeugvorschubrichtung WV orientiert sein kann und/oder sich bogenförmig quer zur Werkzeugvorschubrichtung WV erstrecken kann.

Die Stirnfläche 30 weist insbesondere eine Breite A4 auf, welche wenigstens 5% der maximalen Gesamtbreite A1 des Schneidschar 10 und/oder wenigstens 10% der maximalen Gesamtbreite A1 des Schneidschar 10 entspricht. D.h. weist bspw. das Schneidschar 10 eine maximale Gesamtbreite A1 von 400 mm auf, kann insbesondere vorgesehen sein, dass die Breite A4 der Stirnfläche 30 wenigstens 20 mm und/oder wenigstens 40 mm beträgt.

Zudem kann die Stirnfläche 30 eine Höhe A5 aufweisen, welche im Wesentlichen gleich ist zu einer senkrecht zur Werkzeugvorschubrichtung WV orientieren Höhenerstreckung A2 zwischen der Oberseite 80 und der Unterseite 82.

Gemäß den Figuren 4 wird die Stirnfläche 30 durch eine Nut 32 gebildet, wobei sich die Nut 32 vor dem Montageabschnitt 20 zwischen den Schneidabschnitten 22.1; 22.2 erstreckt. Die Nut 32 weist eine Nuttiefe A6 auf, welche wenigstens 5% der maximalen Schartiefe A9 des Schneidschar 10 beträgt und/oder welche wenigstens 15% der maximalen Schartiefe A9 des Schneidschar 10 beträgt. D.h. weist bspw. das Schneidschar 10 eine maximale Schartiefe A9 von 250 mm auf, kann insbesondere vorgesehen sein, dass die Nuttiefe A6 wenigstens 12,5 mm und/oder wenigstens 25 mm und/oder wenigstens 37,5 mm beträgt.

Das Schneidschar 10, insbesondere die Schneidabschnitte 22.1; 22.2 und/oder die Führungsabschnitte 26 weisen jeweils eine Rückseite 40 auf. Wobei die Rückseite 40 gemäß der Figuren 3A und 3B sowie 4A und 4B im Wesentlichen senkrecht quer zur Werkzeugvorschubrichtung WV orientiert ist, aber auch zumindest abschnittweise bogenförmig sein könnte. Gemäß der Figur 3E könnte die Rückseite jedoch auch durch eine quer zur Werkzeugvorschubrichtung WV orientierte linke Rückseite 40.1 und eine rechte Rückseite 40.2 gebildet wird, welche linke Rückseite 40.1 und rechte Rückseite 40.2 in einem Rückseitenwinkel V6 zueinander orientiert sind, wobei der Rückseitenwinkel V6 in einem Intervall zwischen 30° und 180° liegt und/oder in einem Intervall zwischen 90° und 180° liegt und/oder in einem Intervall zwischen 135° und 180° liegt. Hierbei kann auch vorgesehen sein, dass die linke Rückseite 40.1 und/oder die rechte Rückseite 40.2 zumindest abschnittweise bogenförmig sind.

Das Schneidschar 10 weist jeweils zwei Montageaufnahmen 50 in Form von Schraubaufnahmen 52, d.h. in Form von Ausschnitten bzw. Bohrungen auf.

Zudem weist der Montageabschnitt 20 jeweils eine Flanschfläche 58 mit zumindest einer Montageaufnahme 50 auf, sowie beidseitig neben der Montageaufnahme 50 jeweils Seitenteile 56, sodass die Flanschfläche 58 und die Seitenteile 56 eine Tasche 54 ausbilden. Zudem ist eine Schraubaufnahme 52 im Bereich der Tasche 54 angeordnet.

Die Flanschfläche 58 ist in einem Anstellwinkel V7 gegenüber der Oberseite 80 des Führungsabschnitts 26 angeordnet, wobei der Anstellwinkel V7 wenigstens 30° oder wenigstens 40 beträgt und/oder maximal 50° oder maximal 60° beträgt.

Die Tasche 54 weist zudem eine Taschentiefe A7 aus, welche wenigstens 10 mm oder wenigstens 25 mm oder wenigstens 50 mm beträgt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Schneidschar
- 11: Montagerichtung (Schneidschar)
- 12: Bodenbearbeitungsmaschine
- 14: Werkzeugkombination

- 20: Montageabschnitt
- 22.1: Erster Schneidabschnitt
- 22.2: Zweiter Schneidabschnitt
- 24: Übergangsabschnitt
- 26: Führungsabschnitt

- 30: Stirnfläche
- 32: Nut

- 40: Rückseite
- 40.1: Linke Rückseite
- 40.2: Rechte Rückseite

- 50: Montageaufnahme
- 52: Schraubaufnahme
- 54: Tasche
- 56: Seitenteil
- 58: Flanschfläche

- 60: Schneide
- 62: Verschleißfestes Material
- 70: Verbindungsstruktur
- 80: Oberseite
- 82: Unterseite

- 90: Federungseinrichtung
- 100: Scharspitze
- 102: Schneidkante
- 104: Montageelement
- 110: Rahmenkonstruktion
- 112: Einebnungswerkzeug
- 114: Rückverfestigungselemente
- 116: Scharreihe

- 120: Träger

- FR: Fahrtrichtung
- WV: Werkzeugvorschubrichtung
- ML: Mittellinie, Mittelachse

- V1: Erster Winkel
- V2: Zweiter Winkel
- V3: Schneidwinkel
- V4: Öffnungswinkel
- V5: Neigungswinkel
- V6: Rückseitenwinkel
- V7: Anstellwinkel
- V8: Freiwinkel

- A1: Maximale Gesamtbreite
- A2: Höhenerstreckung
- A3: Mindestbreite
- A4: Breite
- A5: Höhe
- A6: Nuttiefe
- A7: Taschentiefe
- A8: Arbeitsbreite
- A9: Schartiefe
- A10: Schneidenabstand
- A11: Strichabstand

## Patentansprüche

1. Schneidschar (10), vorzugsweise für eine landwirtschaftliche
Bodenbearbeitungsmaschine (12), insbesondere für eine Werkzeugkombination (14) einer landwirtschaftlichen Bodenbearbeitungsmaschine (12),
- mit einem Montageabschnitt (20), wobei der Montageabschnitt (20) zumindest eine Montageaufnahme (50), insbesondere zur Montage an einem Träger einer Werkzeugkombination, umfasst,
- und mit zumindest einem ersten Schneidabschnitt (22.1) und zumindest einem zweiten Schneidabschnitt (22.2),
**dadurch gekennzeichnet, dass** der erste Schneidabschnitt (22.1) links und der zweite Schneidabschnitt (22.2) rechts neben dem Montageabschnitt (20) angeordnet ist, und dass die Schneidabschnitte (22.1; 22.2) jeweils eine Schneide (60) aufweisen, wobei die Schneiden (60) einen Schneidwinkel (V3) gegenüber der Werkzeugvorschubrichtung (WV) ausbilden.

2. Schneidschar nach Anspruch 1, **dadurch gekennzeichnet, dass** das Schneidschar (10) einstückig ausgebildet ist und/oder aus mehreren Einzelteilen zusammengesetzt ist, wobei die mehreren Einzelteile mittels lösbaren und/oder unlösbaren Verbindungselementen und/oder Verbindungsstrukturen einstückig verbunden sind.

3. Schneidschar nach Anspruch 1 oder 2, **dadurch gekennzeichnet, dass** die Schneidabschnitte (22.1; 22.2) jeweils einen Übergangsabschnitt (24) und einen Führungsabschnitt (26) aufweisen, wobei der Übergangsabschnitt (24) sich zwischen dem Montageabschnitt (20) und dem Führungsabschnitt (26) erstreckt, und wobei der Übergangsabschnitt (24) durch eine Verbindungsstruktur (70) und/oder durch eine, einen Radius ausbildende Fläche gebildet wird.

4. Schneidschar nach einem der vorhergehenden Ansprüche, **dadurch gekennzeichnet, dass** die Schneidabschnitte (22.1; 22.2) in deren äußeren Bereichen jeweils einen Führungsabschnitt (26) aufweisen und dass die Schneidabschnitte (22.1; 22.2) jeweils eine Oberseite (80) und eine Unterseite (82) aufweisen, wobei die Oberseite (80) zur Unterseite (82) eine senkrecht zur Werkzeugvorschubrichtung (WV) orientierte Höhenerstreckung (A2) aufweisen, welche zumindest im Bereich der Führungsabschnitte (26) kleiner ist als 25% der maximalen Gesamtbreite (A1) des Schneidschar (10) und/oder kleiner ist als 10% der maximalen Gesamtbreite (A1) des Schneidschar (10) und/oder kleiner ist als 5% der maximalen Gesamtbreite (A1) des Schneidschar (10) und/oder kleiner ist als 3% der maximalen Gesamtbreite (A1) des Schneidschar (10).

5. Schneidschar nach einem der vorhergehenden Ansprüche, **dadurch gekennzeichnet, dass** die Führungsabschnitte (26) jeweils eine Mindestbreite (A3) aufweisen, wobei die zwei Mindestbreiten (A3) addiert eine Breite aufweisen, welche wenigstens 50% und/oder wenigstens 60% und/oder wenigstens 70% der maximalen Gesamtbreite (A1) des Schneidschar (10) beträgt.

6. Schneidschar nach einem der vorhergehenden Ansprüche, **dadurch gekennzeichnet, dass** die Oberseiten (80) und/oder die Unterseiten (82) der Führungsabschnitte (26), insbesondere des Führungsabschnitts (26) links neben dem Montageabschnitt (20) und des Führungsabschnitts (26) rechts neben dem Montageabschnitt (20), symmetrisch zueinander sind und/oder im Wesentlichen parallel zueinander orientiert sind.

7. Schneidschar nach einem der vorhergehenden Ansprüche, **dadurch gekennzeichnet, dass** die Schneidabschnitte (22.1; 22.2), insbesondere die Führungsabschnitte (26), jeweils eine Oberseite (80) und eine Unterseite (82) aufweisen, welche zumindest abschnittweise weitgehend parallel zueinander orientiert sind und/oder einen sich entgegen der Werkzeugvorschubrichtung (WV) öffnenden Öffnungswinkel (V4) ausbilden, wobei der Öffnungswinkel (V4) kleiner ist als 15° und/oder kleiner ist als 10° und/oder kleiner ist als 5°.

8. Schneidschar nach einem der vorhergehenden Ansprüche, **dadurch gekennzeichnet, dass** die Schneidabschnitte (22.1; 22.2) eine im Wesentlichen gleichbleibende Materialstärke aufweisen, insbesondere dass die Führungsabschnitte (26) eine im Wesentlichen gleichbleibende Materialstärke aufweisen.

9. Schneidschar nach einem der vorhergehenden Ansprüche, **dadurch gekennzeichnet, dass** die Schneide (60) links gegenüber der Werkzeugvorschubrichtung (WV), insbesondere gegenüber einer Mittelachse (ML) des Schneidschar (10), einen ersten Winkel (V1) ausbildet, und dass die Schneide (60) rechts gegenüber der Werkzeugvorschubrichtung (WV), insbesondere gegenüber einer Mittelachse (ML) des Schneidschar (10), einen zweiten Winkel (V2) ausbildet, wobei der erste Winkel (V1) und der zweite Winkel (V2) den Schneidwinkel (V3) bilden, und wobei
- der erste Winkel (V1) und der zweite Winkel (V2) zumindest weitgehend gleich sind und/oder
- der erste Winkel (V1) und der zweite Winkel (V2) eine Differenz zueinander aufweisen, welche Differenz wenigstens 2° und/oder wenigstens 5° und/oder wenigstens 10° beträgt.

10. Schneidschar nach einem der vorhergehenden Ansprüche, **dadurch gekennzeichnet, dass** die Schneiden (60) und/oder zumindest eine der Schneiden (60) quer zur Werkzeugvorschubrichtung (WV), zumindest abschnittweise bogenförmig ausgebildet sind.

11. Schneidschar nach einem der vorhergehenden Ansprüche, **dadurch gekennzeichnet, dass** die Schneide (60) links und/oder die Schneide (60) rechts entgegengesetzt zur Werkzeugvorschubrichtung (WV) in einem Neigungswinkel (V5) geneigt sind, insbesondere von der Unterseite (82) in Richtung zur Oberseite (80) entgegengesetzt zur Werkzeugvorschubrichtung (WV) in einem Neigungswinkel (V5) geneigt sind.

12. Schneidschar nach Anspruch 11, **dadurch gekennzeichnet, dass** der Neigungswinkel (V5) maximal 45° und/oder maximal 30° und/oder maximal 15° und/oder maximal 5° beträgt.

13. Schneidschar nach einem der vorhergehenden Ansprüche, **dadurch gekennzeichnet, dass** die Schneiden (60) und/oder die Unterseite (82) und/oder die Oberseite (80), zumindest abschnittweise mit einem verschleißfesten Material (62) bestückt sind, insbesondere mit einem Hartmetall bestückt sind.

14. Schneidschar nach einem der vorhergehenden Ansprüche, **dadurch gekennzeichnet, dass** das Schneidschar (10) eine, dem Montageabschnitt (20) vorgeordnete, sich quer zur Werkzeugvorschubrichtung (WV) erstreckende Stirnfläche (30) aufweist, wobei die Stirnfläche (30) eine Breite (A4) aufweist, welche wenigstens 5% der maximalen Gesamtbreite (A1) des Schneidschar (10) und/oder wenigstens 10% der maximalen Gesamtbreite (A1) des Schneidschar (10) entspricht.

15. Schneidschar nach Anspruch 14, **dadurch gekennzeichnet, dass** die Stirnfläche (30) eine Höhe (A5) aufweist, welche im Wesentlichen gleich ist zu einer senkrecht zur Werkzeugvorschubrichtung (WV) orientierten Höhenerstreckung (A2) zwischen der Oberseite (80) und der Unterseite (82).

16. Schneidschar nach Anspruch 14, **dadurch gekennzeichnet, dass** die Stirnfläche (30) durch eine vor dem Montageabschnitt (20) und sich zwischen den Schneidabschnitten (22.1; 22.2) erstreckende Nut (32) gebildet wird, wobei die Nut (32) eine Nuttiefe (A6) aufweist, welche wenigstens 5% der maximalen Schartiefe (A9) des Schneidschar (10) beträgt und/oder welche wenigstens 15% der maximalen Schartiefe (A9) des Schneidschar (10) beträgt.

17. Schneidschar nach einem der vorhergehenden Ansprüche, **dadurch gekennzeichnet, dass** das Schneidschar (10), insbesondere die Schneidabschnitte (22.1; 22.2) und/oder die Führungsabschnitte (26), eine Rückseite (40) aufweisen, wobei die Rückseite (40) im Wesentlichen senkrecht quer zur Werkzeugvorschubrichtung (WV) orientiert ist und/oder zumindest abschnittweise bogenförmig ist, und/oder dass die Rückseite durch eine quer zur Werkzeugvorschubrichtung (WV) orientierte linke Rückseite (40.1) und eine rechte Rückseite (40.2) gebildet wird, welche linke Rückseite (40.1) und rechte Rückseite (40.2) in einem Rückseitenwinkel (V6) zueinander orientiert sind, wobei der Rückseitenwinkel (V6) in einem Intervall zwischen 30° und 180° liegt und/oder in einem Intervall zwischen 90° und 180° liegt und/oder in einem Intervall zwischen 135° und 180° liegt, und/oder dass die linke Rückseite (40.1) und/oder die rechte Rückseite (40.2) zumindest abschnittweise bogenförmig sind.

18. Schneidschar nach einem der vorhergehenden Ansprüche, **dadurch gekennzeichnet, dass** die Montageaufnahme (50) eine oder mehrere Schraubaufnahmen (52) und/oder Flanschelemente umfasst.

19. Schneidschar nach einem der vorhergehenden Ansprüche, **dadurch gekennzeichnet, dass** der Montageabschnitt (20) zumindest eine Flanschfläche (58) mit zumindest einer Montageaufnahme (50) aufweist, sowie beidseitig neben der Montageaufnahme (50) angebrachte Seitenteile (56) aufweist, wobei die Flanschfläche (58) und die Seitenteile (56) insbesondere eine Tasche (54) ausbilden.

20. Schneidschar nach Anspruch 19, **dadurch gekennzeichnet, dass** wenigstens eine Schraubaufnahme (52) und/oder ein Flanschelement im Bereich der Tasche (54) angeordnet ist.

21. Schneidschar nach Anspruch 19, **dadurch gekennzeichnet, dass** die Tasche (54) eine Taschentiefe (A7) aufweist, welche wenigstens 10 mm oder wenigstens 25 mm oder wenigstens 50 mm beträgt.

22. Schneidschar nach einem der vorhergehenden Ansprüche, **dadurch gekennzeichnet, dass** die Flanschfläche (58) einen Anstellwinkel (V7) gegenüber der Oberseite (80) des Führungsabschnitts (26) aufweist, wobei der Anstellwinkel (V7) wenigstens 30° oder wenigstens 40° beträgt und/oder maximal 50° oder maximal 60° beträgt.

23. Werkzeugkombination (14), vorzugsweise für eine landwirtschaftliche Bodenbearbeitungsmaschine (12), **dadurch gekennzeichnet, dass** diese zumindest eine Federungseinrichtung (90), einen Träger (120) und ein Schneidschar (10) nach zumindest einem der Ansprüche 1 bis 22 umfasst.

24. Werkzeugkombination nach Anspruch 23, **dadurch gekennzeichnet, dass** die Federungseinrichtung (90) ausgebildet ist, eine definierte Vorspannkraft zu erzeugen und/oder dass die Federungseinrichtung (90) durch ein, insbesondere zumindest eine Druckfeder und/oder zumindest eine Zugfeder aufweisendes, Federpaket gebildet ist.

25. Werkzeugkombination nach einem der Ansprüche 23 oder 24, **dadurch gekennzeichnet, dass** das Schneidschar (10) einen Montageabschnitt (20) aufweist, mit zumindest einer Flanschfläche (58), in welcher zumindest eine Montageaufnahme (50) angeordnet ist, und mit beidseitig neben der Montageaufnahme (50) angebrachten Seitenteilen (56), wobei die Flanschfläche (58) und die Seitenteile (56) eine Tasche (54) ausbilden und wobei der Träger (120) zumindest abschnittweise in die Tasche (54) hineinragt.

26. Werkzeugkombination nach einem der Ansprüche 23 bis 25, **dadurch gekennzeichnet, dass** diese eine Scharspitze (100) mit einer Schneidkante (102) aufweist, wobei das Schneidschar (10) und die Scharspitze (100) derartig am Träger (120) angebaut sind, dass die Scharspitze (100), insbesondere die Schneidkante (102) und die Schneide (60) des Schneidschar (10) in Werkzeugvorschubrichtung (WV) im Wesentlichen auf gleicher Höhe liegen und/oder einen senkrecht zur Werkzeugvorschubrichtung (WV) orientierten Schneidenabstand (A10) aufweisen, welcher wenigstens 10 mm oder wenigstens 20 mm beträgt und welcher Schneidenabstand (A10) maximal 150 mm oder 100 mm beträgt.

27. Werkzeugkombination nach einem der Ansprüche 23 bis 26, **dadurch gekennzeichnet, dass** das Schneidschar (10) und die Scharspitze derartig am Träger (120) montiert werden, dass die Flanschfläche (58) des Schneidschar (10) gegenüber der Werkzeugvorschubrichtung (WV) hinter dem Träger (120) angebracht ist und die Scharspitze (100) vor dem Träger (120) angebracht ist.

28. Werkzeugkombination nach einem der Ansprüche 23 bis 27, **dadurch gekennzeichnet, dass** das Schneidschar (10) und die Scharspitze (100) mit zumindest einem gemeinsamen Montageelement (104) am Träger (120) befestigt werden.

29. Werkzeugkombination nach einem der Ansprüche 23 bis 28, **dadurch gekennzeichnet, dass** das Schneidschar (10) eine Stirnfläche (30) aufweist, und dass die Scharspitze (100) im Wesentlichen die gleiche Breite wie die Stirnfläche (30) aufweist, wobei die Stirnfläche (30) wenigstens eine Breite (A4) aufweist, welche wenigstens 5% der maximalen Gesamtbreite (A1) des Schneidschar (10) und/oder wenigstens 10% der maximalen Gesamtbreite (A1) des Schneidschar (10) entspricht.

30. Werkzeugkombination nach einem der Ansprüche 23 bis 29, **dadurch gekennzeichnet, dass** der Träger (120) derartig ausgeführt ist und/oder dass das Schneidschar (10) derartig am Träger (120) montiert ist, dass dieses, insbesondere die Unterseite (82) der Führungsabschnitte (26), gegenüber der Werkzeugvorschubrichtung WV und/oder gegenüber einer Bodenoberfläche einen Freiwinkel (V8) ausbildet, insbesondere einen Freiwinkel (V8) ausbildet der maximal 10° und/oder maximal 5° und/oder maximal 3° beträgt.

31. Landwirtschaftliche Bodenbearbeitungsmaschine (12), **dadurch gekennzeichnet, dass** diese zumindest zwei Schneidschare (10) nach zumindest einem der Ansprüche 1 bis 22 und/oder zumindest zwei Werkzeugkombination (14) nach zumindest einem der Ansprüche 23 bis 30 umfasst.

32. Bodenbearbeitungsmaschine nach Anspruch 31, **dadurch gekennzeichnet, dass** die Schneidschare (10) und/oder Werkzeugkombinationen (14) quer zur Fahrtrichtung (FR) der Bodenbearbeitungsmaschine (12) in einem Strichabstand (A11) beabstandet zueinander angeordnet sind, wobei der Strichabstand (A11) derartig definiert ist, dass sich die Schneidschare (10) quer zur Fahrtrichtung (FR) zumindest abschnittweise überdecken.

33. Bodenbearbeitungsmaschine nach Anspruch 32, **dadurch gekennzeichnet, dass** die Summe der maximalen Gesamtbreite (A1) der wenigstens zwei Schneidschare (10) mindestens 5% oder mindestens 10% oder mindestens 20% größer ist als die Arbeitsbreite (A8) der Bodenbearbeitungsmaschine (12).

34. Bodenbearbeitungsmaschine nach einem der Ansprüche 31 bis 33, **dadurch gekennzeichnet, dass** das Schneidschar (10) und/oder die Werkzeugkombination (14) derartig an einer Rahmenkonstruktion (110) montiert ist/sind, dass eine Unterseite (82) der Führungsabschnitte (26) gegenüber der Werkzeugvorschubrichtung WV und/oder gegenüber einer Bodenoberfläche einen Freiwinkel (V8) ausbildet, insbesondere einen Freiwinkel (V8) ausbildet, der maximal 10° und/oder maximal 5° und/oder maximal 3° beträgt.

35. Bodenbearbeitungsmaschine nach einem der Ansprüche 31 bis 34, **dadurch gekennzeichnet, dass** die Schneidschare (10) und/oder Werkzeugkombinationen (14) in wenigstens zwei Scharreihen (116) hintereinander angeordnet sind, und dass nachfolgend an die Schneidschare (10) und/oder Werkzeugkombinationen (14) Einebnungswerkzeuge und/oder Rückverfestigungselemente, insbesondere eine Packerwalze, angeordnet sind.
